(19) Europäisches Patentamt
European Patent Office
Office européen des brevets

(11) Veröffentlichungsnummer: **0 193 026**
**B1**

(12) # EUROPÄISCHE PATENTSCHRIFT

(45) Veröffentlichungstag der Patentschrift: **19.04.89**

(51) Int. Cl.⁴: **C 08 G 59/06**, C 08 G 59/24

(21) Anmeldenummer: **86101755.6**

(22) Anmeldetag: **12.02.86**

(54) **Spezielle Epoxid-Harze.**

(30) Priorität: **23.02.85 DE 3506519**

(43) Veröffentlichungstag der Anmeldung: **03.09.86 Patentblatt 86/36**

(45) Bekanntmachung des Hinweises auf die Patenterteilung: **19.04.89 Patentblatt 89/16**

(84) Benannte Vertragsstaaten: **CH DE FR GB IT LI NL**

(56) Entgegenhaltungen:
**FR-A-2 322 161**
**US-A-3 767 618**

**Handbook of Epoxy Resins, Lee & Neville, McGraw-Hill, 1967, pp. 2-10 to 2-11**

(73) Patentinhaber: **BAYER AG, Konzernverwaltung RP Patentabteilung, D-5090 Leverkusen 1 Bayerwerk (DE)**

(72) Erfinder: **Wahle, Bernd, Dr., Hasselstrasse 35a, D-4044 Kaarst 2 (DE)**
Erfinder: **Freitag, Dieter, Dr., Hasenheide 10, D-4150 Krefeld (DE)**
Erfinder: **Uerdingen, Walter, Dr., Humperdinckstrasse 41, D-5090 Leverkusen 1 (DE)**
Erfinder: **Heine, Heinrich, Müritzstrasse 38, D-5090 Leverkusen 1 (DE)**
Erfinder: **Blazejak, Manfred, Dr., Richardstrasse 81, D-4000 Düsseldorf (DE)**

**EP 0 193 026 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft Epoxidharze zur Herstellung von heiß- und kalthärtbaren Formkörpern, Beschichtungsmassen und Klebemassen, hergestellt durch Umsetzung von Epichlorhydrin mit ausgewählten Gemischen von Phenolen.

Die Umsetzung von mehrwertigen Phenolen, im besonderen 2,2-Bis(4-hydroxyphenyl)-propan (Bisphenol A) mit Epichlorhydrin ist als Basisreaktion zur Herstellung von Epoxidharzen bekannt (z. B. "Epoxy Resins, Chemistry and Technology", herausgegeben von C.A. May und Y. Tanaka, Marcel Dekker, Inc., New York 1973 und US-PS-3 121 727).

Die so hergestellten Epoxidharze besitzen Wasser-, Wärme- und Chemikalienbeständigkeit sowie hohe mechanische Stabilität. Jedoch sind sie spröde, haben eine oft unerwünscht hohe Viskosität, was die Aufnahmekapazität für Füllstoffe begrenzt und/oder die Verarbeitbarkeit erschwert, sowie eine Neigung zur Kristallisation durch die eingebrachten Füllstoffe oder durch Verunreinigungen, was vor der Verarbeitung den zusätzlichen Arbeitsschritt des Aufschmelzens erforderlich macht.

Es sind eine Reihe von Additiven zur Elastifizierung von Epoxidharzen vorgeschlagen worden, beispielsweise die in der Firmenschrift der B.F. Goodrich Comp., Cleveland, Ohio, USA: "Tonghen Epoxy-Resins with HYCAR® RLP" "Schlagzäh-Modifizierung von Epoxidharzen mit HYCAR®-Reaktiven-Flüssig-Polymeren" beschrieben. Doch geht damit meistens eine Erniedrigung der Wärmeformbeständigkeit und eine unerwünschte Erhöhung der Viskosität einher.

Eine bekannte Methode zur Senkung der Viskosität stellt die Verwendung sogenannter reaktiver Verdünner dar, meist Monoepoxide niederer Viskosität (s. beispielsweise "Epoxy Resins, Chemistry and Technology", loc. cit., S. 298 ff). Doch ergibt sich so meist eine unerwünschte Verdünnung der Netzwerkdichte, was meistens einen Abfall der mechanischen Eigenschaften zur Folge hat.

Es wurde nun ein Epoxidharz-System gefunden, welches die Vorzüge der Epoxidharze auf Basis aromatischer Bisphenole, speziell Bisphenol A aufweist, sich aber durch eine niedrigere Viskosität und damit eine höhere Füllstoffkapazität auszeichnet, mit allen üblichen und bekannten Epoxidharz-Härtern problemlos aushärtbar ist und in den ausgehärteten Formkörpern eine gesteigerte Elastizität zufweist.

Gegenstand der Erfindung sind daher Epoxid-Harze erhältlich durch Umsetzung von Epichlorhydrin mit Mischungen verschiedener, zum Teil isomerer ein- und mehrwertiger Phenole, in unterschiedlichen Gewichtsverhältnissen zueinander, dadurch gekennzeichnet, daß das Phenolgemisch im wesentlichen besteht aus:

a) mindestens 5 Gew.-% 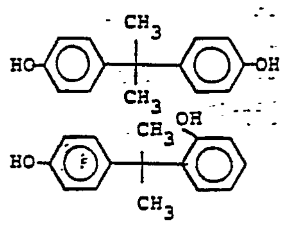 und

b) 1 - 20 Gew.-% und

c) 5 - 30 Gew.-% 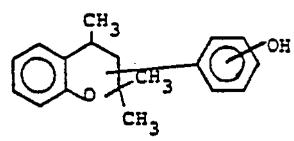 und

d) 5 - 25 Gew.-% 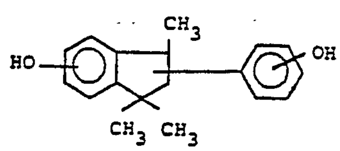 und

e) 0,5 - 5 Gew.-% 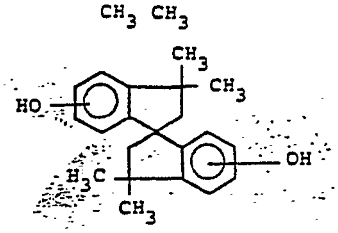 und

f) 0,5 - 10 Gew.-% 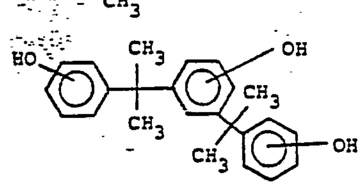 und

g) gegebenenfalls 0 - 10 Gew.-% Phenol.

Gegenstand der Erfindung ist auch die Verwendung der erfindungsgemäße Epoxidharze als Beschichtigungsmasse, Klebmasse und Vergußmasse.

Die so erhältlichen Epoxidharze zeichnen sich im nichtausgehärteten Zustand durch niedrige Viskositäten aus, die sich durch Variationen der Mischungsverhältnisse der eingesetzten Phenole minimieren lassen. Die Abmischung mit den üblichen Mengen üblicher Härter sind teilweise niedriger-viscos als die den Stand der Technik darstellenden Abmischungen von Epoxid-Harzen auf der Basis von Bisphenol A. Im zusgehärteten Zustand sind ihre mechanischen Eigenschaften trotz Einsatz eines reaktiven Verdünners vergleichbar oder besser als die von Epoxidharzen aus reinem Bisphenol A und Epichlorhydrin (Diglycidylether des Bisphenol A).

Die zum Teil gegebenenfalls substituierten isomeren Bisund Tris-Phenole besitzen eine oder mehrere phenolische OH-Gruppen. Sie sind vorzugsweise Umsetzungsprodukte von unsubstituierten, sowie einfach- und mehrfach- substituierten Phenolen mit Carbonylverbindungen.

Die isomeren Bis- und Trisphenole können beispielsweise mit einer oder mehreren Alkylgruppen mit 1 bis 10 C-Atomen und mit einem oder mehreren Halogenen wie Chlor und Brom substituiert sein. Es können beispielsweise verwendet werden:

2-Methyl-, -Cyclohexyl-, -Isopropyl-, -tert.-Butyl-,
4-Methyl-, -Cyclohexyl-, -Isopropyl-, -tert.-Butyl-,
2,3-Dimethyl-, -Cyclohexyl-, -Isopropyl-, -tert.-Butyl-,
2,4-Dimethyl-, -Cyclohexyl-, -Isopropyl-, -tert.-Butyl-,
2,5-Dimethyl-, -Cyclohexyl-, -Isopropyl-, -tert.-Butyl-,
2,6-Dimethyl-, -Cyclohexyl-, -Isopropyl-, -tert.-Butyl-,
2,3,5-Trimethyl-, -Isopropyl-, -tert.-Butyl-,
2,3,6-Trimethyl-, -Isopropyl-, -tert.-Butyl-,
2,4,5-Trimethyl-, -Isopropyl-, -tert.-Butyl-,
2,3,4,5-Tetramethyl-, -Isopropyl-,
2,3,5,6-Tetramethyl-, -Isopropyl-,
2-Chlor-, -Brom-, 3-Chlor-, -Brom-, 4-Chlor-, -Brom-,
2,3-Dichlor-, -brom-, 2,4-Dichlor-, -brom-, 2,5-Dichlor-, -brom-,
2,6-Dichlor-, -brom-, 2,3,5-Trichlor-, 2,3,6-Trichlor-,
2,4,5-Trichlor-, 2-Phenyl-, 4-Phenyl-, 4-Carboxyl-phenol-,
2-Naphthol und vorzugsweise Phenol.

Als Carbonylverbindungen können Aldehyde und Ketone, vorzugsweise Ketone verwendet werden. Beispielsweise Ketone wie:

Methylethyl-, Methylpropyl-, Methylisopropyl-, Methylisobutyl-, Methylpentyl-, Diethyl-, Ethylbutyl-, Dibenzyl-, Methyl-(4-flurophenyl)-, Methyl-(3,4-dichlorphenyl), Trifluormethylphenyl-, Ethylphenyl-keton, Cyclopentanon, 2-Methylcyclopentanon, Cyclohexanon, 2-Methyl-, 3-Methyl-, 4-Methyl-, 3,5-Dimethylcyclohexanon, Dekalon, Chlormethylmethylketon, Bis(chlormethyl)keton, Bis(dichlorfluormethyl)keton, Bis(trifluormethyl)keton, Butandion, Pentandion-(2,4), Hexandion-(2,5), Benzil und vorzugsweise Dimethylketon (Aceton) und beispielsweise Aldehyde wie Formaldehyd, Ethanal, Propanal, Butanäl, 2-Methylpropanal, Pentanal, Hexanal, Chloracetaldehyd, 2,2,2-Trichloracetaldehyd, Benzaldehyd, 2-Chlorbenzaldehyd und vorzugsweise Formaldehyd.

Es können z. B. die Rohprodukte einer solchen Umsetzung ohne weitere Reinigung eingesetzt werden, wobei ein Anteil von nicht näher identifizierten Nebenprodukten in einer Menge von bis zu 10 Gew.-% nicht zu stören braucht.

Gegebenenfalls können als Komponente g) 0 - 10 Gew.-% Phenol zugesetzt werden.

Die erfindungsgemäßen Epoxid-Harze können gegebenenfalls nach üblichen Methoden mit üblichen Polycarbonsäureanhydriden zu Säureanhydrid-gehärteten oder mit üblichen Aminen zu amingehärteten Formkörpern verarbeitet werden.

Unter üblichen Polycarbonsäureanhydriden werden aromatische, aliphatische und cycloaliphatische Polycarbonsäureanhydride oder deren Mischungen verstanden.

Als Beispiele seien genannt: Phthalsäureanhydrid, Tetrahydrophthalsäureanhydrid, Hexachlorendomethylentetrahydrophthalsäureanhydrid, Endomethylen-tetrahydrophthalsäureanhydrid, Methylendomethylentetrahydrophthalsäureanhydrid, Hexahydrophthalsäureanhydrid, Methylhexahydrophthalsäureanhydrid, Bernsteinsäureanhydrid, Maleinsäureanhydrid, Dodecenylbernsteinsäureanhydrid, vorzugsweise flüssige bzw. niedrigschmelzende (F < 60°C), cycloaliphatische Dicarbonsäureanhydride. Besonders bevorzugt werden Hexahydrophthalsäureanhydrid und cis-3- und/oder 4-Methylhexahydrophthalsäureanhydrid.

Geeignete Amine sind beispielsweise Hexamethylendiamin, Polyetherdiamine von Polyalkylenglykolethern, deren Hydroxylgruppen durch primäre Aminogruppen ersetzt sind, Diethylentriamin, Triethylentetramin, Tetraethylenpentamin, Pentaethylenhexamin, Dimethylaminopropylamin, Aminoethylethanolamin, Methadiamin, N-Aminoethylpiperazin, Diaminocyclohexan, 4,4'-Diamino-3,3'-dimethyldicyclohexylmethan, Isophorondiamin, m-Xylendiamin, Tetrachlor-p-xylylendiamin, m-Phenylendiamin, 4,4'-Diaminodiphenylmethan, 4,4'-Diaminodiphenylsulfon, 4-Methyl-3,5-diaminobenzoesäureisopropylester, 3,3'-Diethoxycarbonyl-4,4'-diamino-diphenylmethan, 2,6-Diaminopyridin, Substitutionsprodukte der erwähnten Verbindungen sowie Abmischungen zweier oder mehrerer Amine.

Geeignete Polyaminoamide sind die üblichen Kondensationsprodukte aus Dicarbonsäuren und Diaminen.

**Beispiel 1**

311,2 g einer Mischung aus:

| | |
|---|---|
| 55 Gew.-% | 2,2-Bis(4-hydroxyphenyl)propan und |
| 10 Gew.-% | 2-(2-Hydroxyphenyl)-2-(4-hydroxyphenyl)-propan und |
| 8 Gew.-% | 1,1,3-Trimethyl-3-(4-hydroxyphenyl)-chroman und |
| 8 Gew.-% | 1,1,3-Trimethyl-3-(4-hydroxyphenyl)-6-hydroxyindan und |
| 2 Gew.-% | 1,1'-(3,3,3',3'-tetramethyl-6,6'-dihydroxy)-spirobisidan und |
| 7 Gew.-% | 2-(4-Hydroxyphenyl)-2-[4-hydroxy-5-(2-{4-hydroxyphenyl}-2-propylidenyl)phenyl]-propan und |
| 10 Gew.-% | Phenol |

mit einer OH-Zahl von 468 mg KOH/g Substanz, d. h. 1 Mol phenolischer OH-Gruppen in 119,7 g obiger Phenolmischung, werden in 1202,5 ml (13 Mol) Epichlorhydrin und 46 g Methanol vorgelegt und zum Sieden erhitzt (ca. 95°C). Unter diesen Bedingungen werden 115,5 g feste NaOH in 10 gleichen Portionen so zugegeben, daß die Exothermie der eintretenden Reaktion die Reaktionsmischung am Sieden erhält und die Heizung entfernt werden kann. Nach beendeter Zugabe läßt man noch 2 Stunden unter Sieden nachreagieren, dann werden überschüssiges Epichlorhydrin, Methanol und Reaktionswasser im Vakuum bis zu einer maximalen Sumpftemperatur von 90°C abdestilliert. Anschließend gibt man unter Rühren 320 g Toluol und 580 g Wasser zu, rührt 15 Minuten bei Raumtemperatur, läßt dann ca. 30 Minuten absetzen und trennt die wäßrige Phase ab. Die organische Phase wird mit $NaH_2PO_4$-Lösung bis zu einem pH-Wert $\leqslant 6$ gewaschen. Das Toluol wird bei einem Vakuum von 70 bis 100 mbar abdestilliert; gegen Ende der Destillation wird das Vakuum auf $\leqslant 10$ mbar erniedrigt und die Sumpftemperatur auf 140°C gesteigert. Bei dieser Temperatur wird das Sumpfprodukt 3 Stunden mit einem starken Stickstoffstrom ausgeblasen und heiß filtriert. Das so erhaltenen Produkt weist folgende Daten auf:

| | |
|---|---|
| Viskosität: | 5,9 Pa·s (25°C) |
| Äquivalentgewicht: | 190 g |
| Chlorgehalt: | 0,5 % |

**Beispiel 2** (Vergleichsbeispiel)

296,4 g (1,3 Mol) 2,2-Bis(4-hydroxyphenyl)-propan ("Bisphenol A") werden mit 1202,5 g (13 Mol) Epichlorhydrin wie in Beispiel 1 beschrieben zum Epoxidharz umgesetzt. Das so erhaltene Produkt weist folgende Daten auf:

| | |
|---|---|
| Viskosität: | 10,1 Pa·s (25°C) |
| Äquivalentgewicht: | 185 g |
| Chlorgehalt: | 0,5 % |

**Herstellung säureanhydridgehärteter Formkörper**

**Beispiel 3**

100 Gew.-Teile des Epoxid-Harzes erhalten nach Beispiel 1 werden bei 60°C mit 70 Gew.-Teilen Hexahydrophthalsäureanhydrid und 1 Gew.-Teil Dimethylbenzylamin versetzt, nach vollständiger Auflösung evakuiert man bis zur völligen Blasenfreiheit bei 3 mbar und vergießt zu 4 mm starken Platten. Diese werden 4 Stunden bei 80°C angehärtet und 16 Stunden bei 120°C ausgehärtet.

Aus diesen Platten werden die zur Messung der mechanischen Eigenschaften erforderlichen Normstäbe geschnitten. Gemessen werden:

Reißfestigkeit und Reißdehnung nach DIN 53 455, Elastizitätsmodul nach DIN 53 457, Biegefestigkeit und Randfaserdehnung nach DIN 53 452, Schlagzähigkeit nach DIN 53 453, Kugeldruckhärte nach DIN 53 456 und Wärmeformbeständigkeit nach Martens gemäß DIN 53 458. Die Ergebnisse sind in Tabelle 1 aufgelistet.

**Beispiel 4** (Vergleichsbeispiel)

Das Epoxid-Harz erhalten nach Beispiel 2 wird wie unter Beispiel 3 beschrieben zu Platten vergossen und ausgehärtet. Die resultierenden mechanischen Eigenschaften sind ebenfalls in Tabelle 1 aufgelistet.

Die Formkörper, erhalten aus den neuen Epoxidharzen nach Säureanhydrid-Härtung, zeichnen sich durch

eine erhöhte Elastizität aus, ersichtlich besonders in der deutlich gesteigerten Randfaserdehnung.

**Herstellung amingehärteter Formkörper**

**Beispiel 5**

100 Gew.-Teile des Epoxidharzes nach Beispiel 1 werden bei Raumtemperatur mit 20 Gew.-Teilen Pentaethylenhexamin versetzt und die klare Lösung zu 4 mm starken Platten vergossen. Diese werden 24 Stunden bei Raumtemperatur gehärtet und anschließend 3 Stunden bei 120°C getempert. Aus diesen Platten werden die zur Messung der mechanischen Eigenschaften erforderlichen Normstäbe geschnitten. Die Ergebnisse sind in Tabelle 2 aufgelistet.

**Beispiel 6** (Vergleichsbeispiel)

Das Epoxidharz erhalten nach Beispiel 2 wird wie unter Beispiel 5 beschrieben zu Platten vergossen und ausgehärtet. Die resultierenden mechanischen Eigenschaften sind ebenfalls in Tabelle 2 aufgelistet.

Die Formkörper erhalten aus den neuen Epoxidharzen nach Amin-Härtung zeichnen sich durch Verbesserungen ihrer mechanischen Eigenschaften aus.

**Tabelle 1**

Mechanische Eigenschaften säureanhydridgehärteter Formkörper

| | | Beispiel 3 | Beispiel 4 (Vergleichsbsp.) |
|---|---|---|---|
| Reißfestigkeit | (MPa) | 91 | 92 |
| Reißdehnung | (%) | 4,2 | 3,2 |
| E-Modul | (MPa) | 3375 | 2550 |
| Biegefestigkeit | (MPa) | 145 | 140 |
| Randfaserdehnung | (%) | 6,0 | 3,5 |
| Schlagzähigkeit | (kJ/m²) | 180 | 180 |
| Wärmeformbeständigkeit nach Martens | (°C) | 100 | 115 |

**Tabelle 2**

Mechanische Eigenschaften amingehärteter Formkörper

| | | Beispiel 5 | Beispiel 6 (Vergleichsbsp.) |
|---|---|---|---|
| Reißfestigkeit | (MPa) | 87 | 39 |
| Reißdehnung | (%) | 5,1 | 2,5 |
| E-Modul | (MPa) | 3355 | 2530 |
| Biegefestigkeit | (MPa) | 139 | 88 |
| Randfaserdehnung | (%) | 6,3 | 4,5 |
| Schlagzähigkeit | (kJ/m²) | 24,8 | 14,0 |
| Kugeldruckhärte | (MPa) | 170 | 130 |
| Wärmeformbeständigkeit nach Martens | (°C) | 95 | 110 |

**Patentansprüche**

1. Epoxidharze erhältlich durch Umsetzung von Epichlorhydrin mit Mischungen verschiedener, zum Teil isomerer ein- und mehrwertiger Phenole, in unterschiedlichen Gewichtsverhältnissen zueinander, dadurch gekennzeichnet, daß das Phenolgemisch im wesentlichen besteht aus:

a) mindestens 5 Gew.-%

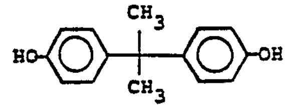

und

b) 1 - 20 Gew.-% 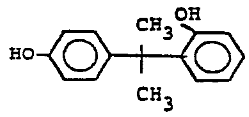 und

c) 5 - 30 Gew.-% 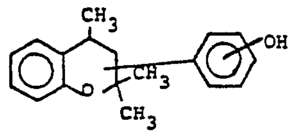 und

d) 5 - 25 Gew.-% 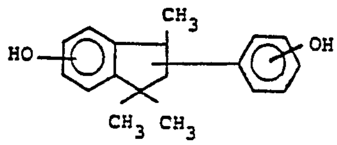 und

e) 0,5 - 5 Gew.-% 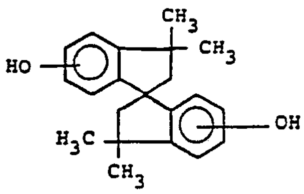 und

f) 0,5 - 10 Gew.-% 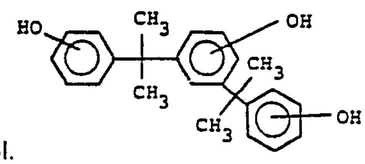 und

g) gegebenenfalls 0 - 10 Gew.-% Phenol.

2. Verwendung der Epoxidharze gemäß Anspruch 1 als Beschichtungsmasse, Klebmasse und Vergußmasse.

## Claims

1. Epoxy resins obtainable by reaction of epichlorohydrin with mixtures of various, partly isomeric mono- and polyhydric phenols in different quantitative ratios to one another, characterized in that the phenol mixture used consists essentially of:

a) at least 5 % by weight 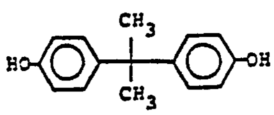 and

b) at least 1 - 20 % by weight 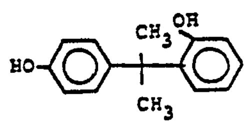 and

c) at least 5 - 30 % by weight 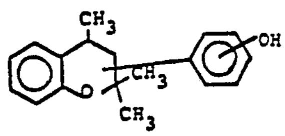 and

d) at least 5 - 25 % by weight
HO 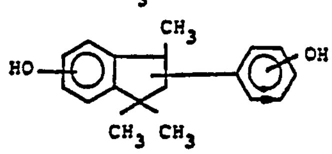 and

e) at least 0,5 - 5 % by weight 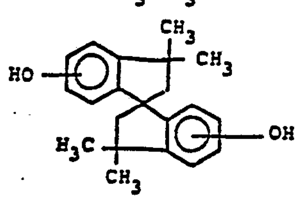 and

f) at least 0,5 - 10 % by weight 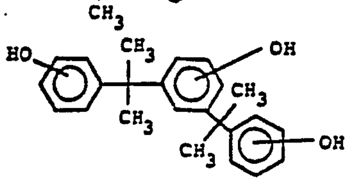 and

g) optionally 0 - 10 % by weight phenol.

2. The use of the epoxy resins claimed in claim 1 as sealing compounds, adhesives and encapsulating compounds.

## Revendications

1. Résines époxydes, que l'on peut obtenir par réaction de l'épichlorhydrine avec des mélanges de phénols différents, monophénols et polyphénols, en partie isomères, en des proportions ponderales différentes les unes des autres, résines caractérisées en, ce que le mélange des phénols consiste essentiellement en:

a) au moins 5 % en poids de 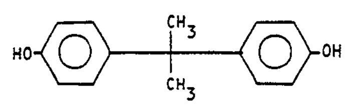 et

b) 1 à 20 % en poids de 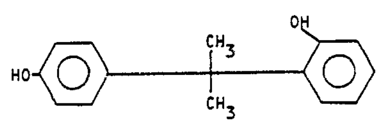 et

c) 5 à 30 % en poids de 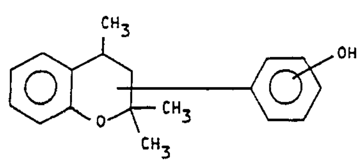 et

d) 5 à 25 % en poids de 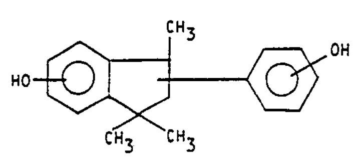 et

e) 0,5 à 5 % en poids de 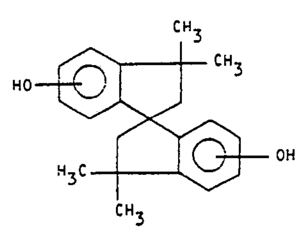 et

f) 0,5 à 10 % en poids de 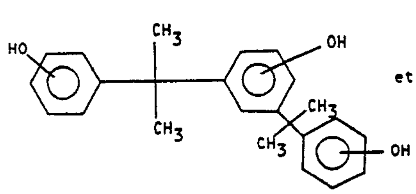 et

et

g) éventuellement 0 à 10 % en poids de phénol.

2. Utilisation des résines époxydes selon la revendication 1, comme composition de revêtement, composition d'adhésif et composition pour la coulée ou le moulage.